# EUROPÄISCHE PATENTSCHRIFT

(11) **EP 1 139 798 B1**
(45) Veröffentlichungstag und Bekanntmachung des Hinweises auf die Patenterteilung: **21.04.2004**
(21) Anmeldenummer: 99962232.7
(22) Anmeldetag: 07.12.1999
(51) Int. Cl.: A23L 1/31, A23B 4/005, A22C 7/00

(54) **VERFAHREN ZUR HERSTELLUNG VON SCHINKENPRODUKTEN**
METHOD FOR PRODUCING HAM PRODUCTS
PROCEDE DE FABRICATION DE PRODUITS A BASE DE JAMBON

(30) Priorität: 23.12.1998 DE 19859830
(43) Veröffentlichungstag der Anmeldung: 10.10.2001
(73) Patentinhaber: ZIMBO Fleisch- und Wurstwaren GmbH & Co. KG, 44799 Bochum (DE)
(72) Erfinder: ZIMMERMANN, Reinhold, D-58511 Lüdenscheid (DE)
(74) Vertreter: Schneiders, Josef, Dipl.-Ing.
(86) Internationale Anmeldenummer: PCT/EP1999/009582
(87) Internationale Veröffentlichungsnummer: WO 2000/038542

(56) Entgegenhaltungen:
- EP-A- 0 438 619
- DE-A- 3 413 295
- GB-A- 2 074 839
- NL-A- 7 201 989
- US-A- 3 987 209
- DATABASE WPI Section Ch, Week 9523 Derwent Publications Ltd., London, GB; Class D12, AN 95-176445 XP002131755 & RO 108 526 A (BOICEAN ET AL.), 30. Juni 1994 (1994-06-30)

## Beschreibung

Die Erfindung betrifft ein Verfahren zur Herstellung von Schinkenprodukten und danach hergestellte Schinkenprodukte in einer Folienverpackung.

Es sind zahlreiche Verfahren zur Herstellung von Schinkenprodukten bekannt, bei denen Fleischstücke nach einer Vorbehandlung zusammengepreßt und gegart werden. Diese Verfahren haben den Vorteil, daß für das Schinkenprodukt selbst auch kleinere Fleischstücke eingesetzt werden können, die in dem fertigen Produkt aufgrund der Vorbehandlung fest aneinander haften und den Eindruck eines gewachsenen Schinkens ergeben.

Die Herstellungsverfahren derartiger Schinken sehen zumeist aus Kostengründen eine relativ kurze Garzeit bei erhöhten Temperaturen vor. Das Ergebnis ist ein optisch einwandfreies Produkt, das aber in geschmacklicher Hinsicht nicht immer allen Anforderungen genügt.

Der Druckschrift US3987209 beschreibt ein Verfahren zur Herstellung eines Schinkenproduktes, bei dem die vorbehandelten Fleischstücke in einem Behälter unter Vakuum behandelt werden. Anschließend wird das Garverfahren unter Vakuum durchgeführt.

Es sind weiterhin seit langem Verfahren zur schonenden Garung von gewachsenem Schinken bekannt, die ein Produkt mit guten optischen und sensorischen Ergebnissen liefern. Nachteil dieser tradierten Verfahren ist, daß sich gewachsener Schinken in seiner Größe und seinen Abmessungen nur wenig zur Herstellung konfektionierter Produkte eignet.

Eine Übertragung der schonenden Garverfahren auf andere Verfahren, bei denen Schinkenprodukte aus Fleischstücken zusammengesetzt und gepreßt werden und in Drahtgeflechtkörben geformt und gegart werden, war bislang nicht möglich. Die dabei erhaltenen Produkte hatten zwar die für die Konfektionierung des Produkts notwendigen standardisierten Abmessungen, entsprachen aber in ihrer Qualität nicht den schonend gegarten Schinkenprodukten aus gewachsenem Fleisch. Insbesondere war es nicht möglich, Schinkenprodukte herzustellen, die zumindest teilweise von einer Fett- und Schwartenkruste umgeben waren und eine vom Verbraucher geschätzte, geschmacksgebende krosse Oberfläche aufweisen.

Der Erfindung liegt somit die Aufgabe zugrunde, ein Verfahren zur Herstellung von Schinkenprodukten bereitzustellen, das es erlaubt schonend gegarte, sensorisch hochwertige Schinkenprodukte mit einem Speckrand und gegebenenfalls einer krossen Kruste herzustellen. Solche Schinkenprodukte sollten eine für die Konfektionierung in Scheibenform in Folienverpackungen geeignete Größe, insbesondere Länge aufweisen und sicherstellen, daß die im Herstellungsverfahren verliehenen geschmacklichen Eigenschaften weitgehend erhalten bleiben. Gleichzeitig sollten solche Schinkenprodukte frei von Einschlüssen sein und den Eindruck eines gewachsenen Schinkens erwecken, d. h. kompaktiert und verdichtet sein.

Diese Aufgabe wird mit einem Verfahren der eingangs genannten Art gelöst, das als Schritte aufweist:
- Auslegen einer einseitig offenen Form mit einer äußeren Schwartenschicht
- zumindest teilweises Auslegen der Form mit einer Speckschicht,
- Auffüllen der Form durch Aufpressen von entvliesten gespritzten und massierten Fleischstücken,
- Abdecken der gefüllten Form mit einem auf der Füllmasse aufliegenden Deckel,
- Vakuumieren der gefüllten Form,
- nach Rückkehr zu normalen Druckbedingungen Garen der Füllmasse über einen Zeitraum von wenigstens 7h bei einer Temperatur von höchstens 90°C,
- Ausformen des gegarten Schinkenprodukts,
- Einreiben der Schwarte mit Salz,
- Versehen der Schwarte mit diagonalen Einschnitten,
- Backen des Schinkenproduktes über einen Zeitraum von wenigstens zwei Stunden bei einer Temperatur nicht über 300°C.

Das erfindungsgemäße Verfahren wird in einer einseitig offenen Form durchgeführt, d. h. einer Form, die aus einem endseitig verschlossenen, oben offenen und mit gerundetem Boden versehenen Trog besteht. Die Form hat die Abmessung, die für das jeweils gewünschte Schinkenprodukt vorgesehen ist, beispielsweise eine Länge von ca. 1 m bei einer maximalen Weite von ca. 25 cm. Zweckmäßigerweise sind diese Formen aus Edelstahl.

Eine solche Form wird in einem ersten Schritt entlang der Außenwandung zumindest mit Speckplatten ausgekleidet, vorzugsweise mit einer äußeren Schwarten- und einer inneren Speckschicht. Die Schwarten- oder Speckplatten befinden sich dabei zumindest im Bodenbereich der Form, können aber auch die Wandung teilweise oder ganz abdecken. Es ist ferner möglich, ein allseitig ummanteltes Schinkenprodukt zu erzeugen.

Im nächsten Schritt wird die ausgekleidete Form mit der Fleischfüllung in Form von geimpften und massierten Fleischstücken gefüllt. Dabei wird darauf geachtet, daß die Fleischstücke dicht an dicht liegen und möglichst wenig Luft zwischen sich aufnehmen. Durch die Lakebestandteile und die Massierung kommt es dann zu einer Bindung der Fleischstücke untereinander und an die äußere Speckschicht.

Anschließend wird die mit der Füllmasse gefüllte Form durch einen aufliegenden Deckel verschlossen. Der Deckel ist in die Form eingepaßt und liegt direkt auf der Fleischmasse auf.

Die gefüllte Form wird anschließend in eine Vakuumkammer gegeben und vakuumiert. Ziel dieser Maßnahme ist es, Lufteinschlüsse zu entfernen und damit ein homogenes Produkt zu schaffen. Im allgemeinen erfolgt das Vakuumieren bei einer Temperatur T ≥ 5°C und insbesondere bei Raumtemperatur. Der Druck richtet sich im allgemeinen nach dem Dampfdruck von Wasser bei der jeweiligen Temperatur und liegt bei P ≥ 20 mbar. Es ist ausreichend, wenn das Vakuum kurzzeitig angelegt wird, solange, daß die enthaltene Luft Zeit hat, aus der Füllmasse zu entweichen.

Nach dem Vakuumieren wird die gefüllte Form wieder auf Normaldruck gebracht, was zur Folge hat, daß sich der Deckel auf die Füllmasse preßt und diese zusätzlich verdichtet. Dieser zusätzliche Verdichtungsschritt ist erwünscht im Hinblick auf eine gleichmäßige Struktur des Schinkenprodukts.

Zusätzlich kann natürlich vorgesehen sein, daß die Schinkenmasse vor dem Vakuumieren kompaktiert wird und/oder daß bei der Vakuumierung der Deckel zusätzlich belastet wird, beispielsweise mit einer hydraulischen Presse, um die Entgasung zu fördern und die Fleischstücke besser aneinander zu binden.

Die mit der Füllmasse gefüllte Form wird anschließend in einer Garkammer über einen Zeitraum von wenigsten 7h bei einer Temperatur von höchstens 90°C gegart. Zweckmäßigerweise erfolgt die Garung bei einer Temperatur von 75°C.

Das gegarte Schinkenprodukt wird anschließend ausgeformt.

In der bevorzugten Ausführungsform, wonach der Schinken eine äußere Schwartenschicht aufweist, wird das Schinkenprodukt nach dem Ausformen mit Salz eingerieben und mit diagonalen Einschnitten auf der Schwarte versehen. Das so vorbehandelte Produkt wird dann über einen Zeitraum von wenigsten 2h bei einer Temperatur nicht über 300°C gebacken. Zweckmäßigerweise beträgt die Temperatur etwa 250°C.

Die Behandlung der Schwarte mit Salz und das Anbringen diagonaler Einschnitte hat zur Folge, daß es unter der Temperatureinwirkung im Backvorgang zur Ausbildung einer krossen und aufgeplatzten Oberfläche kommt. Die beim Backen gebildeten Geschmacksstoffe wie auch das Salz dringen in die obere Schicht des Schinkens ein und verbessern insgesamt das Aroma. Das Produkt erhält dabei ein vom Verbraucher geschätztes krosses Aussehen und einen entsprechenden Geschmack, der sich überraschenderweise auch dann erhält, wenn das Schinkenprodukt aufgeschnitten und in einer Folienverpackung vermarktet wird.

Wichtig ist, daß das erfindungsgemäße Verfahren in einer einseitig offenen Form durchgeführt wird, die mit einem eingepaßten Deckel verschlossen wird. Eingepaßter Deckel bedeutet in diesem Fall, daß der Deckel auf der eingefüllten Masse aufliegt, jedoch nicht so dicht schließt, daß in der Masse enthaltene Luft bei der Vakuumierung nicht entweichen kann. Diese Anordnung ermöglicht es, daß bei Anwendung einer Presse und insbesondere nach Abschluß der Vakuumierung, d. h. bei Rückkehr zum Normaldruck, der Deckel durch die einwirkende Kraft auf die Füllmasse gepreßt wird, diese komprimiert und in die Form eindrückt. Auf diese Art und Weise wird eine optimale Füllung der Form und gleichzeitig ein guter Wärmeübergang zwischen Form und Füllmasse im anschließenden Garverfahren gewährleistet. Dieser Wärmeübergang ist wesentlich für ein gleichmäßig gegartes Produkt und eine gleichmäßige Qualität.

Die im erfindungsgemäßen Verfahren eingesetzten Schwarten und Speck sind konfektionierte Produkte, die in Form von Platten im Handel erhältlich sind. Die zum Einsatz kommenden Fleischstücke sind in üblicher Art und Weise vorbehandelt, d. h. mit Würzlake behandelt und gepoltert bzw. massiert, um die Bindefähigkeit zu einem einheitlichen Produkt herbeizuführen. Vorzugsweise werden die Fleischstücke mit einer jeweils üblichen Würzlake beimpft, vorzugsweise in einem Verfahren, bei dem mit einer Vielzahl von Injektionsnadeln eine gleichmäßige Verteilung der Würzlake im Fleisch erreicht wird und damit die Herabsetzung der verwandten Würzlakenmenge.

Vorzugsweise kommen Schinkenstücke aus der Ober- und/oder Unterschale in Frage, die zur Herabsetzung des Fettgehalts unter Erzeugung eines fettarmen Produkts entvliest und von sichtbaren Fettbestandteilen befreit werden können. Ferner könnten Fleischstücke aus Hüfte und Nuß in Frage kommen.

Das Garen der Schinkenmasse erfolgt in der Form über einen Zeitraum von wenigstens 7h bei einer Temperatur von höchstens 90°C. Im allgemeinen ist festzuhalten, daß eine lange Garzeit und eine mäßige Gartemperatur positiv für die Qualität des Produktes sind, insbesondere für die Aromabildung. Gute Erfahrungen wurden bei einer Formlänge von etwa 1 m und einer Formweite von 25 cm mit einer Garzeit von 10h und einer Gartemperatur von 75°C gesammelt.

Nach dem Garvorgang wird das gegarte Produkt ausgeformt und kann dann als Koch- oder Saftschinken direkt vermarktet werden. Gemäß einer bevorzugten Ausführungsform ist das Produkt aber mit einer äußeren Schwartenschicht belegt und wird in einem weiteren Verfahrensschritt gebacken. Hierzu wird die Schwartenschicht in üblicher Weise gesalzen und mit Einschnitten versehen, vorzugsweise kreuzweise in diagonaler Richtung. Anschließend wird der Schinkenlaib in einer Backstation wenigstens 2h bei einer Temperatur von nicht mehr als 300°C gebacken. Bei Schinkenlaiben der vorstehend genannten Dimension haben sich Backtemperaturen von 250°C und Backzeiten von 2,5h bewährt.

Durch den Backvorgang wird eine krosse Kruste erzielt, die entlang der Einschnitte aufreißt. Neben einer ansprechenden Optik ergibt sich hierdurch ein Eindringen der im Backvorgang erzeugten Aromastoffe in das innere des Schinkenlaibs und damit eine erwünschte Aromaverstärkung.

Das so erhaltene Schinkenprodukt kann in Form des Laibs in den Handel gebracht werden, ist aber auch für die Vermarktung in Scheibenform in einer Folienverpackung gut geeignet. Es hat sich gezeigt, daß auch folienverpackte geschnittene Produkte ihr Aroma behalten. Bedingt durch die Verfahrensführung mit Vakuumierung und langer Garzeit ist und bleibt das Produkt "saftig", ohne daß es zum Austritt von nicht gebundener Flüssigkeit in der Verpackung kommt. Die im erfindungsgemäßen Verfahren erhaltenen gestreckten Schinkenlaiben von beispielsweise 1 m Länge und einem definierten Durchmesser sind besonders vorteilhaft für die Konfektionierung des Produkts in Packungen mit mehreren Scheiben gleichen Durchmessers und gleicher Qualität. Beim Aufschneiden ergibt sich zudem im Endbereich nur ein geringer Verschnitt.

Das erfindungsgemäße Verfahren erfüllt schließlich auch die Anforderungen an die Standardisierung gemäß bestehender Normen.

## Patentansprüche

1. Verfahren zur Herstellung von Schinkenprodukten, welches die folgenden Schritte aufweist:
- Auslegen einer einseitig offenen Form mit einer äußeren Schwartenschicht
- zumindest teilweises Auslegen der Form mit einer Speckschicht,
- Auffüllen der Form durch Aufpressen von entvliesten gespritzten und massierten Fleischstücken,
- Abdecken der gefüllten Form mit einem auf der Füllmasse aufliegenden Deckel,
- Vakuumieren der gefüllten Form,
- nach Rückkehr zu normalen Druckbedingungen Garen der Füllmasse über einen Zeitraum von wenigstens 7h bei einer Temperatur von höchstens 90°C,
- Ausformen des gegarten Schinkenprodukts,
- Einreiben der Schwarte mit Salz,
- Versehen der Schwarte mit diagonalen Einschnitten,
- Backen des Schinkenproduktes über einen Zeitraum von wenigstens zwei Stunden bei einer Temperatur nicht über 300°C.

2. Verfahren nach Anspruch 1, **dadurch gekennzeichnet, daß** das Schinkenprodukt bei einer Temperatur von etwa 250°C gebacken wird.

3. Verfahren nach einem der vorstehenden Ansprüche **dadurch gekennzeichnet, daß** das Garen bei einer Temperatur von etwa 75°C erfolgt.

4. Verfahren nach einem der vorstehenden Ansprüche, **dadurch gekennzeichnet, daß** die Fleischstücke aus entvliesten Schinkenstücken der Ober- und/oder Unterschale ausgewählt werden.

5. Verfahren nach einem der vorstehenden Ansprüche, **dadurch gekennzeichnet, daß** die Fleischstücke mit Würzlake beimpft und solange massiert werden, bis das nötige Bindevermögen erreicht ist.

6. Verfahren nach einem der vorstehenden Ansprüche, **dadurch gekennzeichnet, daß** das Vakuumieren bei einem Druck ≥ 20mbar und einer Temperatur ≥ 5°C erfolgt.

7. Verfahren nach einem der vorstehenden Ansprüche, **dadurch gekennzeichnet, daß** im Vakuumierungsschritt der Deckel auf die Füllmasse gepreßt wird.

8. Fertig verpacktes Schinkenprodukt, erhalten nach dem Verfahren eines der vorstehenden Ansprüche.

9. Schinkenprodukt nach Anspruch 8, **dadurch gekennzeichnet, daß** es geschnitten in einer transparenten Folienverpackung enthalten ist.

## Claims

1. A method of producing ham products, which comprises the following steps:
- lining a mould which is open at one side with an outer rind layer,
- at least partially lining the mould with a bacon layer,
- filling the mould by pressing on membrane-skinned injected and kneaded pieces of meat,
- covering the filled mould with a lid which lies on the filling material,
- subjecting the filled mould to vacuum,
- after return to normal pressure conditions cooking the filling material over a period of at least 7 hours at a temperature of at most 90°C,
- removing the cooked ham product from the mould,
- rubbing salt into the rind,
- providing the rind with diagonal cuts, and
- baking the ham product over a period of at least two hours at a temperature not above 300°C.

2. A method according to claim 1 **characterised in that** the ham product is baked at a temperature of about 250°C.

3. A method according to one of the preceding claims **characterised in that** the cooking operation is effected at a temperature of about 75°C.

4. A method according to one of the preceding claims **characterised in that** the pieces of meat are selected from membrane-skinned pieces of ham from the topside and/or silverside.

5. A method according to one of the preceding claims **characterised in that** the pieces of meat are inoculated with seasoning brine and kneaded until the necessary binding capability is attained.

6. A method according to one of the preceding claims **characterised in that** the vacuum-application operation is effected at a pressure ≥ 20 mbar and a temperature ≥ 5°C.

7. A method according to one of the preceding claims **characterised in that** in the vacuum-application step the cover is pressed on to the filling material.

8. A ready-packed ham product obtained by the method according to one of the preceding claims.

9. A ham product according to claim 8 **characterised in that** it is contained in cut form in a transparent foil pack.

## Revendications

1. Procédé de fabrication de produits à base de jambon, qui comprend les étapes consistant à :
- Tapisser un moule ouvert d'un côté avec une couenne extérieure
- tapisser au moins partiellement le moule avec une couche de lard,
- Remplir le moule en appliquant par pression des pièces de viande dénervées, injectées et massées,
- Couvrir le moule rempli avec un couvercle s'appliquant sur la masse de remplissage,
- Mettre sous vide le moule rempli,
- après le retour à des conditions de pression normale, cuisson de la masse de remplissage pendant une durée d'au moins 7h à une température au maximum de 90°C,
- Démouler le produit à base de jambon cuit,
- Frotter la couenne avec du sel,
- Réaliser dans la couenne des entailles diagonales,
- Cuire le produit à base de jambon pendant une durée d'au moins deux heures à une température non supérieure à 300°C.

2. Procédé selon la revendication 1, **caractérisé en ce que** le produit à base de jambon est cuit à une température d'environ 250°C.

3. Procédé selon l'une des revendications précédentes, **caractérisé en ce que** la cuisson a lieu à une température d'environ 75°C.

4. Procédé selon l'une des revendications précédentes, **caractérisé en ce que** les pièces de viande sont sélectionnées de pièces de jambon dénervé de la cuisse supérieure/inférieure.

5. Procédé selon l'une des revendications précédentes, **caractérisé en ce qu'**une saumure d'assaisonnement est injectée dans les pièces de viande, et que celles-ci sont massées jusqu'à l'obtention du pouvoir de liaison nécessaire.

6. Procédé selon l'une des revendications précédentes, **caractérisé en ce que** la mise sous vide a lieu à une pression de ≥ 20mbar et une température de ≥ 5°C.

7. Procédé selon l'une des revendications précédentes, **caractérisé en ce que** lors de l'étape de la mise sous vide, le couvercle est appliqué par pression sur la masse de remplissage.

8. Produit à base de jambon fini emballé, obtenu selon le procédé conforme à l'une des revendications précédentes.

9. Produit à base de jambon selon la revendication 8, **caractérisé en ce qu'**il se trouve à l'état coupé dans un emballage de feuille transparente.
